# EUROPÄISCHE PATENTANMELDUNG

(11) **EP 3 293 321 A1**
(43) Veröffentlichungstag der Anmeldung: **14.03.2018**
(21) Anmeldenummer: 17189572.5
(22) Anmeldetag: 06.09.2017
(51) Int. Cl.: E04C 2/08, E04C 2/34, B28B 1/52

(54) **VERFAHREN ZUR HERSTELLUNG EINES FLÄCHIGEN DISTANZELEMENTS UND DISTANZELEMENT**

(30) Priorität: 07.09.2016 CH 11582016
(71) Anmelder: Ludwig Elkuch AG, 9487 Bendern (LI)
(72) Erfinder: Büchel, Gabriel, 9495 Triesen (LI)
(74) Vertreter: Riederer Hasler & Partner Patentanwälte AG

(57) **Zusammenfassung**

Bei einem Verfahren zur Herstellung eines flächigen, aus zwei planparallelen, ersten (13) und zweiten Metallplatten (15) bestehenden Distanzkörpers (11), bei welchem zwischen der ersten (13) und der zweiten Metallplatte (15) eine Mehrzahl von Distanzelementen (17) in Abstand voneinander angeordnet wird, werden in einem ersten Schritt die Distanzelemente (17) auf einer Seite der ersten Metallplatte (13), oder verteilt auf je einer Seite der ersten (13) und der zweiten Metallplatte (15) festgeklebt, und in einem zweiten Schritt die ersten und zweiten Metallplatten (13,15) miteinander verklebt. Die Erfindung betrifft auch einen flächigen Distanzkörper (11) aus Metall mit zwei durch eine Vielzahl von Distanzelementen (17) beabstandeten Metallplatten (13,15), bei denen die Distanzelemente (17) mit den beiden Metallplatten mittels Klebestellen verbunden sind. Die voneinander beabstandeten, ungefähr parallel angeordneten Distanzelemente bilden Kanäle (31,33) für die Luft- resp. Dampfzirkulation, die an einander gegenüberliegenden Seiten offen sind.

## Beschreibung

### Gebiet der Erfindung

Die Erfindung betrifft ein Verfahren zur Herstellung eines flächigen Distanzelements gemäss Oberbegriff von Anspruch 1, sowie ein Distanzelement gemäss Anspruch 11

### Stand der Technik

Faserzement ist ein Verbundwerkstoff aus Zement, Fasern, Zuschlagstoffen und Wasser, der ein sehr breites Anwendungsgebiet hat. Ein Haupteinsatzbereich des Faserzements liegt im Hochbau (Fassadenplatten, Dachabdeckungen, Innenwandverkleidungen). Üblicherweise hat Faserzement folgende ungefähre Zusammensetzung:

| Anteil in Vol.-proz. | Stoff | Beispiel | Zweck |
|---|---|---|---|
| 40 | Bindemittel | Zement | |
| 11 | Zusatzstoffe | Füllstoffe, wie Kalksteinmehl, Faserzementabfall, Microsilica, Flugasche-Hochofenschlacke | Zur Optimierung des Werkstoffs bzw. Prozesses |
| 2 | Armierungsfasern | Polyethylen, Polypropylene, Polyvinylalkohol, Kohlefaser, Glasfasern | Aufnahme der Biege- und Zugkräfte im Produkt |
| 5 | Prozessfasern | Zellulose, Asbest | Verbessern die Elastizität des Produkts und dienen dem Herstellprozess |
| 12 | Wasser | Unterstützt die Verbindung der Komponenten und ist notwendig für die Hydratisierung des Zements | |
| 30 | Luftporen | | Dienen der Feuchtigkeitsregulierung und Diffusion |

Bei der Herstellung von Faserzementplatten wird das aus den obigen Bestandteilen bestehende Gemisch zuerst in eine Plattenform gebracht (meist durch Hatschek-, Flowon- oder Magnani-Prozess), und die "grünen", noch nicht ausgehärtete Faserzementplatte auf ein Stahlzwischenblech gelegt. Auf die Faserzementplatte wird sodann ein zweites Stahlzwischenblech gelegt, auf welches dann eine weitere, frisch gepresste Faserzementplatte gelegt wird. Dieser Vorgang wird wiederholt bis ein Stapel von Faserzementplatten der gewünschten Höhe erreicht ist. Der Stapel wird dann einer Vorreifung bei Raumtemperatur ausgesetzt und dann umgestapelt, wobei die Stahlzwischenbleche entfernt und jeweils durch Distanzkörper, die Kanäle für die Luftzirkulation aufweisen, ersetzt werden. Nach der Umstapelung wird der Stapel vorgetrockneter Faserzementplatten dann in einen Autoklav transferiert. Der Autoklav wird sodann während einer Zeit zwischen ungefähr 2 und 12 h mit Dampf (p = 0,7 - 1,4 MPa) auf eine Temperatur zwischen ca. 100°C und 250°C aufgeheizt, um die chemische Reaktion zwischen CaO und SiO2 zu beschleunigen und die Platten auszuhärten. Ein Beispiel einer Formplatte zum Pressen von nichtmetallischen Wellplatten ist beispielsweise in der DE-OS_1 584 395 offenbart. Diese besteht gemäss einem Ausführungsbeispiel aus zwei gewellten Blechen, die im Bereich ihrer Flanken mit einer Zwischenlage aus einem Kunststoff versehen sind.

Die Distanzkörper bestehen jeweils aus zwei gleich grossen Stahlblechen, die durch eine Vielzahl von einzelnen Abstandshaltern, ebenfalls aus Stahlblech, voneinander beabstandet sind. Die Abstandshalter haben im Wesentlichen die Gestalt eines «Ω», an dessen beiden Schenkeln jeweils ein seitlich nach aussen abstehender Fortsatz vorgesehen ist. Mit diesem Fortsatz, der planparallel zur Basis des «Ω» ist, sind die Hälfte der Abstandshalter am ersten Stahlbleich und die andere Hälfte am anderen Stahlblech angeschweisst. Die beiden Stahlbleche werden dann so aufeinandergelegt, dass die Abstandshalter jeweils zum anderen Stahlblech hin orientiert sind. Um eine gleichmässige Abstützung zu bekommen, sind die Abstandshalter der beiden Stahlbleche versetzt zueinander angeordnet, sodass diese bei kongruent aufeinander gelegten Stahlblechen in regelmässigen Abständen voneinander beabstandet sind. Da ein Verschweissen der Distanzelementhälften wegen der grossen Fläche wirtschaftlich nicht mehr möglich ist, werden zur Verbindung der beiden aufeinandergelegten Stahlbleche nachträglich Löcher in die Distanzelemente gebohrt, die über die Länge des Stahlzwischenblechs miteinander fluchten. Danach werden Stangen mit endständigen Schraubengewinden durch die Löcher gestossen und danach mit Muttern festgeschraubt.

Das beschriebene Herstellverfahren ist zeitintensiv und kostspielig. Die nur punktuell vorgesehenen Schweissstellen müssen nachbearbeitet werden, da diese ansonsten korrodieren. Ein weiterer Nachteil ist, dass das Stahlblech sich an den Schweissstellen geringfügig verzieht, sodass die Oberfläche uneben ist.

FR-A-2 207 581 offenbart eine hohle Stahlplatte, die bei der Konstruktion von Gebäuden, industriellen Behältern und Eisenbahnwagen verwendbar ist. Die Stahlplatte besteht aus zwei Stahlblechen, die über Verbindungselemente eine vorbestimmte Distanz voneinander beabstandet und durch einen Rahmen luftdicht abgedichtet sind. Die Verbindungselemente können U-förmig sein, wobei die Schenkel des U's mittels eines Klebers mit den Stahlblechen verbunden sind. Bei der Herstellung der Stahlplatte werden auf das erste Stahlblech die U-förmigen Verbindungsprofile und an das zweite Stahlblech der Rahmen angeklebt. Danach werden die beiden Teile zusammengefügt, wobei die Kontaktstellen wiederum mit einem Kleber bestrichen werden. Danach wird die Stahlplatte evakuiert, um einen entsprechenden Druck auf die Stahlbleche beim Abbinden des Klebers zu generieren. Zum Schluss werden die Hohlräume in der Stahlplatte noch durch ein Dämmmaterial zwecks Schall- oder Wärmedämmung aufgefüllt.

FR-A-2 912 490 offenbart eine hohle Verbundplatte aus Aluminium, welche aus zwei Blechen besteht, die durch eine Mehrzahl von parallel zueinander angeordneten Profilen zusammengehalten sind. Eingesetzt wird die Verbundplatte als Boden auf einem Camion. Dabei hat das obere Blech bessere mechanische Eigenschaften als das untere und ist insbesondere dicker (2 bis 4 mm) als das untere Blech (1 bis 3 mm). Sowohl die Bleche als auch die Profile bestehen aus Aluminium. In einer Ausführungsform ist das Profil im Schnitt Ω-förmig. Die Verbindung zwischen den Komponenten wird durch einen Epoxy-Kleber hergestellt.

FR-A-2 552 017 beschreibt eine Verbundplatte mit hoher Widerstandskraft zur Verwendung in leichten und steifen Konstruktionen. Die Verbundplatte besteht aus zwei flachen Aluminiumblechen, die durch ein drittes Aluminiumblech mit einer im Schnitt umgekehrt trapezförmigen Struktur zusammengehalten sind, wobei die Seitenwände des Trapez als Verstärkungsrippen wirken.

### Aufgabe der Erfindung

Aufgabe der vorliegenden Erfindung ist es, ein Verfahren vorzuschlagen, mit dem flächige Distanzkörper kostengünstig hergestellt werden können. Ein weiteres Ziel ist die Herstellung eines Distanzkörpers, der völlig plane Oberflächen aufweist. Noch ein Ziel ist es, einen Distanzkörper vorzuschlagen, der sich möglichst steif gegenüber dem Produkt verhält, gleichzeitig aber eine konstruktive Elastizität bei thermischer Belastung aufweist und grosse Drucklasten aufnehmen kann.

### Beschreibung

Gegenstand der vorliegenden Erfindung ist ein Verfahren zur Herstellung eines flächigen, aus zwei planparallelen, ersten und zweiten Metallplatten von jeweils 1-6 mm Dicke (vorzugsweise Stahl bzw. Edelstahl) bestehenden Distanzkörpers, bei welchem zwischen der ersten und der zweiten Metallplatte eine Mehrzahl von länglichen Distanzelementen in Abstand voneinander angeordnet wird. Solche Distanzkörper werden bei der Herstellung von flächigen und gewellten Faserzementplatten im Autoklavenprozess in grosser Stückzahl benötigt. Die Distanzkörper weisen üblicherweise eine Breite zwischen 100 und 180 cm und eine Länge zwischen 200 und 800 cm auf. Von Bedeutung ist, dass die Distanzkörper möglichst plan sind und einer Belastung von mehr als 0.03 MPa sowie den atmosphärischen Bedingungen im Autoklaven standhalten können. Dabei ist von Bedeutung, dass die Distanzkörpers zwischen den Distanzelementen durchgehende Kanäle für die Luft- resp. Dampfzirkulation aufweisen. Distanzkörper mit planer Oberfläche garantieren die Verwendbarkeit aller Faserzementplatten im Produktstapel, da sie keine Abdrücke im Faserzement hinterlassen. Im Unterschied hierzu werden im Stand der Technik oft Rohrrahmenkonstruktionen für die Distanzkörper eingesetzt, die Abdrücke im Endprodukt hinterlassen, sodass ein Teil der Platten entsorgt werden muss.

Erfindungsgemäss zeichnet sich das Herstellungsverfahren für die Distanzkörper dadurch aus, dass in einem ersten Schritt die Distanzelemente auf einer Seite der ersten Metallplatte, oder verteilt auf je einer Seite der ersten und der zweiten Metallplatte festgeklebt werden, und in einem zweiten Schritt die ersten und zweiten Metallplatten miteinander verklebt werden. Dieses Herstellverfahren hat den Vorteil, dass es bedeutend rationeller ist als das bisherige Herstellverfahren, bei dem die Distanzelemente jeweils nur mit einer Metallplatte fest und unlösbar verbunden werden. Entsprechend sind im Stand der Technik zusätzliche Verbindungsmittel nötig, um die beiden Metallplatten miteinander zu verbinden.

Vorteilhaft werden als Metallplatten Stahlplatten und als Distanzelemente Stahlprofile verwendet, die in gleichmässigen Abständen von- und im Wesentlichen parallel zueinander auf den Oberflächen der Metallplatten angeordnet werden. Aluminium ist aufgrund der bei der Faserzementproduktion vorherrschenden pH-Werte zwischen 12 und 14 nicht geeignet, da chemisch nicht stabil. Die Länge der Stahlprofile entspricht dabei im Wesentlichen der Länge, bevorzugt aber der Breite der Metallplatten, sodass an einander gegenüberliegenden Seiten offene Kanäle gebildet sind. Durch die Wahl eines geeigneten Abstands zwischen den Distanzelementen in Abhängigkeit der Stärke der eingesetzten Stahlbleche kann der erfindungsgemässe Distanzkörper über die ganze Fläche der vorgesehen Belastung widerstehen, ohne dass die Stahlbleche zwischen den Distanzelementen durchbiegen.

Gemäss einer vorteilhaften Ausführungsform werden als Distanzelemente Ω oder gewinkelte Ω - Stahlprofile eingesetzt, wobei gewinkelte Ω - Stahlprofile bevorzugt sind. Die erwähnten Stahlprofile sind in den geeigneten Stärken und Ausführungen auf dem Markt erhältlich.

Vorteilhaft werden die gewinkelten Ω - Stahlprofile abwechslungsweise auf den Basiskontakt- und Verbindungsflächen und auf den Kopfkontakt- und Verbindungsflächen angeordnet. Dies hat den Vorteil, dass die Belastung des Distanzkörpers unabhängig von dessen Anordnung, d.h. unabhängig davon, welche Metallplatte oben oder unten ist, über die ganze Fläche dieselbe ist.

Gegenstand der Erfindung ist auch ein flächiger Distanzkörper gemäss Oberbegriff von Anspruch 5. Dieser zeichnet sich dadurch aus, dass die Distanzelemente mit den beiden Metallplatten mittels Klebestellen verbunden sind. Dies hat den Vorteil, dass die Verbindungsflächen zwischen den Metallblechen und den Distanzelementen viel grösser sind, als wenn die Komponenten miteinander verschweisst würden. Ein weiterer Vorteil ist, dass die Metallplatten an den zur Korrosion neigenden Schweissstellen nicht nachbearbeitet werden müssen. Des Weiteren wird vorzugsweise ein Klebstoff eingesetzt, der eine elastische Verbindung zwischen den Distanzelementen und den Metallplatten erzeugt. Dadurch kann die Klebeverbindung die beim Autoklavenprozess auftretenden Spannzungen im Werkstoff aufnehmen, was gegenüber geschweissten Verbindungen ein grosser Vorteil ist.

Als Distanzelemente können längliche Stahlprofile mit zwei über mindestens einen Verbindungssteg beabstandeten und planparallelen Kontakt- und Verbindungsflächen eingesetzt sein. Es können somit als Distanzelemente kommerziell erhältliche Z-, gewinkelte Ω oder Ω- Stahlprofile eingesetzt sein. Diese weisen mindesten eine Kopfkontakt- und Verbindungsfläche und eine Basiskontakt- und Verbindungsfläche auf. Gemäss einer besonders bevorzugten Ausführungsform weisen die Distanzelemente zwei Basiskontakt- und Verbindungsflächen und eine einzelne Kopfkontakt- und Verbindungsfläche auf, wobei letztere bevorzugt ungefähr gleich gross ist wie die beiden Basiskontakt- und Verbindungsflächen.

Zweckmässigerweise sind die Stahlprofile parallel und in Abstand zueinander zwischen den Metallplatten angeordnet. Dies ist eine einfache und effiziente Anordnung zur Erreichung einer hohen Druckbelastbarkeit des Distanzkörpers und rationellen Herstellungsweise.

Der Abstand zwischen den Ω-Profilen sollte zwischen 80 und 120 mm liegen. Das Verhältnis der Abstände zweier benachbarter Ω-Profile zur Höhe des Distanzelementes liegt zwischen 0,1 und 2 idealerweise aber zwischen 0,2 und 0,8, um die geforderte Druckbelastbarkeit und Ebenheit (Planarität) zu erreichen. Das Verhältnis der Kopf- und Fusskontaktflächen der Distanzelemente (Ω -Profile) relativ zueinander liegt vorzugsweise zwischen 2:1 und 1:2.

Die Stahlprofile erstrecken sich vorzugsweise von einem Rand zum gegenüberliegenden Rand des Distanzkörpers, d.h. weisen die Breite resp. die Länge der Metallplatten auf. Bei rechteckförmigen Distanzkörpers erstrecken sich die Distanzelemente vorteilhaft parallel zur Schmalseite des Distanzkörpers.

Damit auch die einander gegenüberliegenden, äusseren Ränder des Distanzkörpers die gleiche Belastbarkeit aufweisen, bilden zweckmässigerweise je ein liegendes U-Profil den Abschluss der Distanzelemente auf beiden Seiten des Distanzkörpers.

Vorteilhaft sind die Klebestellen mittels eines Klebers auf Silikon-Basis hergestellt. Silikonkleber haben den Vorteil, dass sie chemisch widerstandsfähig und thermisch sowie mechanisch belastbar sind. Der Klebstoff soll eine Zugfestigkeit von min. 1 MPa erreichen. Alternativ können die Klebestellen mittels eines Klebers auf Epoxidharz oder Methacrylat-Basis hergestellt sein. Die Klebstoffe können zur Verbesserung ihrer Eigenschaften keramische oder metallische Füllstoffe enthalten. Es hat sich in der Praxis gezeigt, dass die Klebestellen vorteilhaft auch nach der Trocknung resp. Härtung vorzugweise noch eine gewisse Elastizität aufweisen (Reissdehnung nach DIN EN ISO > 50 %). Dies hat den Vorteil, dass thermischer Verzug, der während des Erwärmens des Distanzkörper entsteht, von diesem aufgenommen werden kann, ohne dass die Klebeflächen reissen.

Zur erleichterten Verklebung der Elemente und zur Erhöhung der Uniformität der Klebstellen können Einlegedrähte oder kugelförmige Distanzhalter in der Klebermasse verwendet werden.

Gegenstand der vorliegenden Erfindung ist auch die Verwendung der erfindungsgemässen Distanzkörpers bei der Herstellung von Faserzementplatten, insbesondere in einem Autoklavenprozess.

Vorteilhaft wird ein Stapel vorgetrockneter Faserzementplatten, die jeweils durch einen Distanzkörper getrennt sind, in einem Autoklav bei Temperaturen zwischen 110 und 250 Grad, vorzugsweise zwischen 150 und 230 Grad zwischen ungefähr 2 und 12 h getrocknet, gegebenenfalls mit Wasserdampf (p = 0,7 - 1,4 MPa).

Ausführungsbeispiele der Erfindung werden nun unter Bezugnahme auf die beiliegenden Figuren näher im Detail beschrieben.
- Fig. 1: zeigt in Draufsicht ein erstes Ausführungsbeispiel eines erfindungsgemässen Distanzkörper mit strichliert eingezeichneten Distanzelemente;
- Fig. 2: Zeigt eine Seitenansicht der Schmalseite des Distanzkörpers von Fig. 1;
- Fig. 3: Zeigt eine Seitenansicht der Langseite des Distanzkörpers von Fig. 1;
- Fig. 4: Zeigt im vergrösserten Massstab einen Ausschnitt der Langseite des Distanzkörpers von Fig. 1;
- Fig. 5: Zeigt eine perspektivische Ansicht des Distanzkörpers von Fig. 1;
- Fig. 6: Zeigt einen Teilausschnitt der Ansicht von Fig. 5 in vergrössertem Massstab;
- Fig. 7: Zeigt eine perspektivische Ansicht eines Teilausschnitts eines zweiten Ausführungsbeispiels eines Distanzkörpers;
- Fig. 8: Zeigt eine perspektivische Teilansicht des Distanzkörpers von Fig. 7;

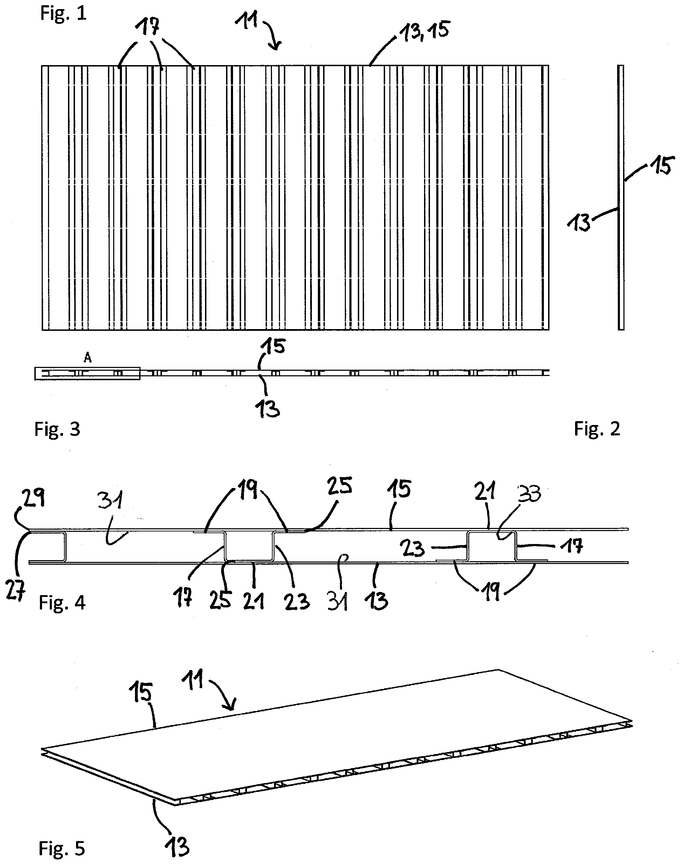

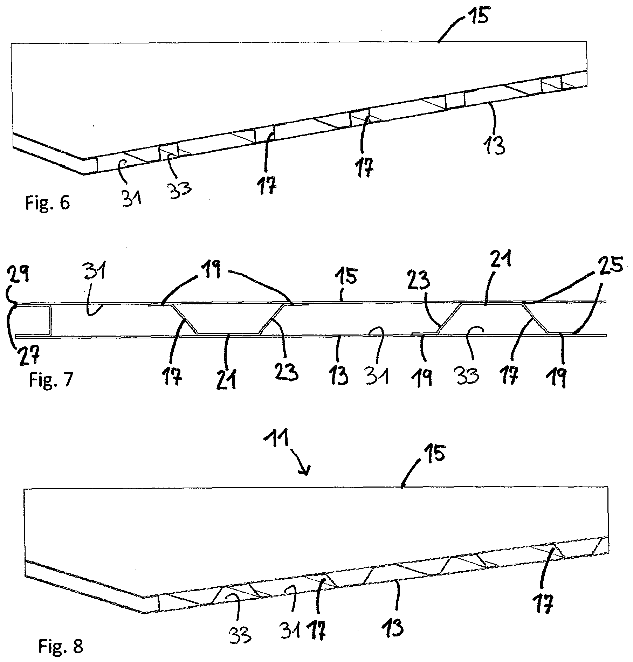

Die Figuren 1 bis 6 zeigen ein erstes Ausführungsbeispiel eines flächigen Distanzkörpers 11, wie er beispielsweise bei der Herstellung von flächigen oder gewellten Faserzementplatten zum Einsatz gelangt. Der Distanzkörper 11 besteht aus einer ersten und zweiten, resp. unteren und oberen, Metallplatte 13,15 und einer Mehrzahl von Distanzelementen 17, durch welche die beiden Metallplatten 13,15 voneinander beabstandet werden.

Die Distanzelemente 17 sind vorzugsweise durch Omega (Ω) - Stahlprofile gebildet, die zwei Basiskontakt- und -Verbindungsflächen 19 und eine Kopfkontakt- und Verbindungsfläche 21 aufweisen, welche durch jeweils einen Steg 23 miteinander verbunden und beabstandet sind. Zwischen den Kontakt- und Verbindungsflächen 19,21 sind Klebestellen 25 vorhanden, mit welchen die Metallplatten 13,15 und Distanzelemente 17 fest und unlösbar miteinander verbunden sind.

An einander gegenüberliegenden Seiten des Distanzkörpers sind liegende U-Metallprofile 26 mit den Kontakt- und Verbindungsflächen 19,21 vorgesehen. Das freie Ende 27 der Kontakt- und Verbindungsflächen 19,21 ist dabei bündig mit dem Rand 29 der Metallplatten 13,15.

Die Räume zwischen zwei benachbarten Distanzelementen 17 bilden Kanäle 31 und der vom Distanzelement 17 umschlossene Raum Kanäle 33 für die Luft- oder Dampfzirkulation.

### Beispiel:

| | |
|---|---|
| Typ des verwendeten Stahlblechs | Syro 7000 |
| Stärke des Stahlblechs: | 1.5 mm |
| Typ Stahlblech für die Distanzelemente: | Syro 7000 |
| Stärke Stahlblech für die Distanzelemente: | 1.5 mm |
| Klebemittel: | Silikon-Komponentenkleber |

Ein Modelldistanzelement in den Dimensionen 380x100x30 mm widerstand bei Raumtemperatur eine Druckkraft von 14680 N und bei einer Eigentemperatur von 190°C 8820 N.

Bei einem Verfahren zur Herstellung eines flächigen, aus zwei planparallelen, ersten und zweiten Metallplatten bestehenden Distanzkörpers, bei welchem zwischen der ersten und der zweiten Metallplatte eine Mehrzahl von Distanzelementen in Abstand voneinander angeordnet wird, werden in einem ersten Schritt die Distanzelemente auf einer Seite der ersten Metallplatte, oder verteilt auf je einer Seite der ersten und der zweiten Metallplatte festgeklebt, und in einem zweiten Schritt die ersten und zweiten Metallplatten miteinander verklebt. Die Erfindung betrifft auch einen flächigen Distanzkörper aus Metall mit zwei durch eine Vielzahl von Distanzelementen beabstandeten Metallplatten, bei denen die Distanzelemente mit den beiden Metallplatten mittels Klebestellen verbunden sind. Die voneinander beabstandeten, ungefähr parallel angeordneten Distanzelemente bilden Kanäle für die Luft- resp. Dampfzirkulation, die an einander gegenüberliegenden Seiten offen sind.

### Legende

- 11: Distanzkörpers
- 13: Erste Metallplatte
- 15: Zweite Metallplatte
- 17: Distanzelemente
- 19: Basiskontakt- und -verbindungsflächen
- 21: Kopfkontakt- und -verbindungsflächen
- 23: Verbindungssteg
- 25: Klebestellen
- 26: Ω-Metallprofile
- 27: freie Ende der Kontakt- und Verbindungsflächen 19, 21
- 29: Rand der Metallplatten 13,15
- 31,33: Kanäle für die Luftzirkulation

## Patentansprüche

1. Verfahren zur Herstellung eines flächigen, aus zwei planparallelen, ersten und zweiten Metallplatten (13,15) bestehenden Distanzkörpers (11) zur Verwendung bei der Herstellung von Faserzementplatten, bei welchem Verfahren zwischen der ersten (13) und der zweiten Metallplatte (15) eine Mehrzahl von Distanzelementen (17) in Abstand voneinander angeordnet wird, sodass zwischen den Distanzelemente Kanäle (31) für die Dampfzirkulation gebildet sind,
**dadurch gekennzeichnet,**
**dass** in einem ersten Schritt die Distanzelemente (17) auf einer Seite der ersten Metallplatte (13), oder verteilt auf je einer Seite der ersten (13) und der zweiten Metallplatte (15) festgeklebt werden, und in einem zweiten Schritt die ersten und zweiten Metallplatten (13,15) miteinander verklebt werden.

2. Verfahren nach Anspruch 1, **dadurch gekennzeichnet, dass** als Metallplatten Stahlplatten und als Distanzelemente (17) Stahlprofile mit einer der Dimension der Metallplatten entsprechenden Länge verwendet werden, die in gleichmässigen Abständen von- und im Wesentlichen parallel zueinander auf den Oberflächen der Metallplatten (13,15) angeordnet werden, sodass zwischen den Distanzelementen Kanäle für die Luft- resp. Dampfzirkulation gebildet sind.

3. Verfahren nach Anspruch 1 oder 2, **dadurch gekennzeichnet, dass** als Distanzelemente Z-, C- oder Ω - Stahlprofile eingesetzt werden.

4. Verfahren nach Anspruch 1 oder 2, **dadurch gekennzeichnet, dass** als Distanzelemente Q - Stahlprofile oder gewinkelte Ω - Stahlprofile eingesetzt werden, die abwechslungsweise auf den Basiskontakt- und Verbindungsflächen (19) und auf Kopfkontakt- und Verbindungsflächen (21) angeordnet werden.

5. Flächiger Distanzkörper (11) aus Metall, insbesondere Stahl, zur Verwendung bei der Herstellung von Faserzementplatten, mit
- einer ersten Metallplatte (13),
- einer zweiten Metallplatte (15), und
- einer Mehrzahl von Distanzelementen (17), die zwischen der ersten und der zweiten Metallplatte angeordnet sind und an gegenüberliegenden Seiten offene Kanäle (31) für die Luft- resp. Dampfzirkulation bilden, und
- Verbindungsmitteln zum Verbinden der beiden Metallplatten,
**dadurch gekennzeichnet,**
**dass** die Distanzelemente (17) mit den beiden Metallplatten (13,15) mittels Klebestellen (25) verklebt sind.

6. Distanzkörper nach Anspruch 5, **dadurch gekennzeichnet, dass** die Metallplatten aus Stahl hergestellt und die Distanzelemente (17) Stahlprofile mit zwei über mindestens einen Verbindungssteg beabstandeten und planparallelen Kontakt- und Verbindungsflächen (19,21) sind.

7. Distanzkörper nach Anspruch 6, **dadurch gekennzeichnet, dass** die Kontakt- und Verbindungsflächen (19,21) der Stahlprofile (17) eine Basisfläche (21) und mindestens eine Kopffläche (19) umfassen.

8. Distanzkörpers nach Anspruch 6 oder 7, **dadurch gekennzeichnet, dass** die Stahlprofile (17) parallel und in Abstand zueinander zwischen den Stahlplatten (13,15) angeordnet sind.

9. Distanzkörper nach einem der Ansprüche 6 bis 8, **dadurch gekennzeichnet, dass** die ungefähr parallel zueinander angeordneten Stahlprofile (17) sich von einem Rand zum gegenüberliegenden Rand des Distanzkörpers (11) erstrecken und Luft- resp. Dampfzirkulationskanäle bilden.

10. Distanzkörper nach einem der Ansprüche 6 bis 9, **dadurch gekennzeichnet, dass** die Stahlprofile (17) eine Z-, C- oder Ω -Form aufweisen.

11. Distanzkörper nach einem der Ansprüche 5 bis 10, **dadurch gekennzeichnet, dass** an einander gegenüberliegenden Seiten des Distanzkörpers je ein liegendes Ω-Profil (26) angeordnet ist.

12. Distanzkörper nach einem der Ansprüche 5 bis 11, **dadurch gekennzeichnet, dass** die Klebestellen (25) mittels eines Klebers auf Epoxidharz-Basis hergestellt sind.

13. Distanzkörper nach einem der Ansprüche 5 bis 11, **dadurch gekennzeichnet, dass** die Klebestellen (25) mittels eines Klebers auf Silikon-Basis hergestellt sind.

14. Verwendung der Distanzkörper nach einem der Ansprüche 5 bis 13 bei Herstellung von Faserzementplatten, insbesondere in einem Autoklaven.

15. Verwendung nach Anspruch 14, **dadurch gekennzeichnet, dass** ein Stapel vorgetrockneter Faserzementplatten, die jeweils durch einen Distanzkörper getrennt sind, in einem Autoklaven bei Temperaturen zwischen 110 und 20 Grad, vorzugsweise zwischen 150 und 230 Grad zwischen 2 und 12 h gehärtet wird.
